# EUROPÄISCHE PATENTSCHRIFT

(11) **EP 0 935 379 B1**
(45) Veröffentlichungstag und Bekanntmachung des Hinweises auf die Patenterteilung: **15.02.2012**
(21) Anmeldenummer: 98123706.8
(22) Anmeldetag: 12.12.1998
(51) Int. Cl.: H04M 3/53

(54) **Verfahren zur automatischen Umwandlung von Textnachrichten oder dergleichen in Sprache**
Method for the automatic conversion of text messages or the like into speech
Méthode pour la conversion automatique de messages de texte ou similaires en signaux de parole

(30) Priorität: 04.02.1998 DE 19804276
(43) Veröffentlichungstag der Anmeldung: 11.08.1999
(73) Patentinhaber: Deutsche Telekom AG, 53113 Bonn (DE)
(72) Erfinder: Schrimpf, Werner, 53179 Bonn (DE)
(74) Vertreter: Borchert, Uwe Rudolf

(56) Entgegenhaltungen:
- EP-A- 0 650 284
- WO-A-92/08309

## Beschreibung

Die Erfindung betrifft ein Verfahren zur automatischen Umwandlung von Textbotschaften bzw. -nachrichten in Sprache nach dem Oberbegriff des Patentanspruchs 1.

Netzbetreiber, wie die Telekom, bieten zum Beispiel über T-Online dem Benutzer eine e-mail Internetadresse an. Die Adresse ist so aufgebaut, daß sie immer den Zugang über ein Telekom-Gateway T-Online dokumentiert oder über ein Gateway eines anderen Netzbetreibers. Alle Online-Nutzer, zum Beispiel T-Online-Nutzer, sind damit in die Lage versetzt, weltweit Nachrichten zu versenden und/oder zu empfangen. Ist eine Nachricht in einer Box eines Netzbetreibers bzw. eines Diensteanbieters, wird diese solange aufbewahrt, bis der berechtigte Benutzer die Zeit findet, sein Postfach (Box) abzufragen. Nach einer bestimmten, wählbaren Zeit, wird eine ungelesene Nachricht automatisch gelöscht. Aktive Internetbenutzer haben ein automatisches Pooling, das heißt ein Abfragen der Box, das in festen Zeitabschnitten ein Postfach abfragt. Dieses Verfahren läuft bereits unter dem Namen "EVOCAL" in einem Versuch der Deutschen Telekom und ist in Pressemeldungen der Deutschen Telekom beschrieben. Mit EVOCAL ist es möglich, innerhalb Deutschlands von jedem Ort aus die neuesten Nachrichten einer TIBIS-Mailbox per Telefon sich vorlesen zu lassen. Es ist also auch während einer Dienstreise zum Beispiel jederzeit möglich, daß ein Nutzer ohne Zeitverzug Zugriff auf seine Mailbox hat und sich die wichtigsten Nachrichten anhören kann oder auch gegebenenfalls lesen kann.

Dieses Verfahren hat jedoch den Nachteil, daß es dem Benutzer nur eine Abfragemöglichkeit ermöglicht. Der Nutzer weiß also nicht, ob etwas in seiner Box gespeichert ist und was in seiner Box gespeichert ist, bevor er eine Abfrage einleitet.

Ein ähnliches Verfahren wird auch derzeit von der in Tokio ansässigen Fastnet, einem zu Cannon gehörigen Internet-Diensteanbieter, getestet. Mit dem System ist es möglich, nach Eingabe einer Identifizierungs-Nummer die im Personalcomputer eingegangenen e-mail über öffentliche Telefone oder Mobiltelefone abzuhören. Die schriftliche Information im Personalcomputer wird dabei in synthetische Sprache umgewandelt und kann dann entweder am Telefon oder am entsprechenden ausgerüsteten Personalcomputer nach Einleitung einer Abfrage gehört werden. Auch dieses System hat den Nachteil, daß der Nutzer nicht darüber informiert wird, ob in seiner Mailbox eine Nachricht gespeichert ist und von wem die Nachricht ist.

In der EP-A 0 650 284 ist außerdem ein Verfahren beschrieben, bei dem die Daten über ein Übertragungsnetz zu einem Netzrechner übertragen werden, wobei die Textnachrichten in ein Sprachformat konvertiert werden und danach die Empfängerrufnummer automatisch und unmittelbar vom Netzrechner angewählt wird und nach dem Abnehmen der Nachricht durch den Empfänger die Sprachnachricht über entsprechende Netze zum Empfänger übertragen wird. Die Zuordnung der Rufnummer zu den Empfängern der Textbotschaften wird im Zusammenhang mit einem Netzrechner einer Datenbank entnommen. Als nachteilig erweist sich hierbei die von dem Netzbetreiber vorzuhaltende separate Datenbank, da diese eine ständige, aufwendig durchzuführende und kostenintensive Aktualisierung bedarf.

Der Erfindung liegt deshalb die Aufgabe zugrunde, ein Verfahren zu schaffen, das die Umwandlung von Textbotschaften bzw. -nachrichten (zum Beispiel in der Form von übermittelten e-mails) in Sprachnachrichten ermöglicht, die dann automatisch und möglichst verzugslos an einen oder mehrere beliebige Telefonanschlüsse im Festnetz- oder Mobilfunknetz weitergeleitet werden sollen und das nach Entgegennahme des Anrufes durch den Nachrichtenempfänger die Durchgabe, das heißt das automatisierte bzw. maschinelle Vorlesen der entsprechend konvertierten Nachricht als Sprachbotschaft an den Empfänger ermöglichen soll.

Die erfindungsgemäße Lösung der Aufgabe ist im kennzeichnenden Teil des Patentanspruchs 1 charakterisiert.

Weitere Lösungen bzw. Ausgestaltungen des Erfindungsgegenstands sind in den Kennzeichen der Patentansprüche 2 bis 12 charakterisiert.

Durch das verbesserte Verfahren ist es unter anderem im Gegensatz zur sprachlichen Abfragemöglichkeit von eingegangenen e-mails möglich, daß jetzt der Empfänger sofort automatisch angerufen wird und ihm die in eine Sprachbotschaft konvertierte e-mail unmittelbar maschinell vorgelesen wird. Die Zwischenschritte
- Benachrichtigung über eingegangene e-mails an den Empfänger
- Anruf und Einwahl in einen entsprechenden Server durch den Empfänger
- Abruf der als Sprachausgabe konvertierten e-mail durch den Empfänger
werden vermieden. Der entsprechende Dienst wird zum Beispiel von einem Netzbetreiber bereitgestellt. Ein weiterer Unterschied zur telefonischen Abfrage von e-mails oder dergleichen, die primär zur Ausgabe an Personalcomputern und ähnlichen erstellt werden, ist diese Anwendung auf die Sprachausgabe an Festnetz- und Mobilfunktelefone zugeschnitten. Der Absender einer Nachricht gibt über entsprechend eingerichtete Eingabemasken eines Online-Dienstes die Nachricht als Text ein. Außerdem wird die reguläre Rufnummer (Fest- oder Mobilnetz) des Empfängers eingegeben. Nach vollständiger Eingabe wird der Text abgesandt. Der Netzbetreiber wandelt diese Textnachricht in eine entsprechende gesprochene Nachricht um. Danach wird der eingegebene Empfängeranschluß angewählt und bei Zustandekommen der Verbindung wird die gesprochene Nachricht automatisch gesteuert an den Empfänger gegeben, das heißt sie wird praktisch vorgelesen.

Die Bezahlung dieses Dienstes durch den Absender kann dabei auf folgende Art und Weise ebenfalls automatisch erfolgen:
a) Bei Online-Diensten, die ein Inkasso ermöglichen, wie zum Beispiel T-Online, durch den Abruf gebührenpflichtiger Seiten seitens der Absender;
b) Bei Online-Diensten, die kein derartiges Inkasso ermöglichen, zum Beispiel durch Abbuchung von der Kreditkarte des Absenders bzw. durch üblichen Lastschrifteinzug und
c) durch Gebührenbelastung an den Angerufenen, wobei dieser noch entscheiden kann, ob er die Nachricht gebührenpflichtig abhören möchte oder nicht.

Weitere Vorteile, Merkmale und Anwendungsmöglichkeiten der vorliegenden Erfindung, insbesondere die große Wahl der verschiedenen Leistungsmerkmale, ergeben sich aus der nachfolgenden Beschreibung in Verbindung mit den in der Zeichnung dargestellten Ausführungsbeispielen.

Die Erfindung wird im folgenden anhand von in der Zeichnung dargestellten Ausführungsbeispielen detailliert beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: eine prinzipielle Darstellung eines Systems zur Umwandlung von Textnachrichten in Sprache und Übertragung an Telefonendeinrichtungen;
- Fig. 2: eine modifizierte Darstellung nach Fig. 1, wobei die Aufzeichnung der zu übertragenden Nachricht über ein Mikrofon eingegeben wird oder die Erfassung der zuzustellenden Nachricht über ein spezielles Software-Programm erfolgt und
- Fig. 3: eine prinzipielle Darstellung zur Erfassung der zu übertragenden Textnachricht als e-mail.

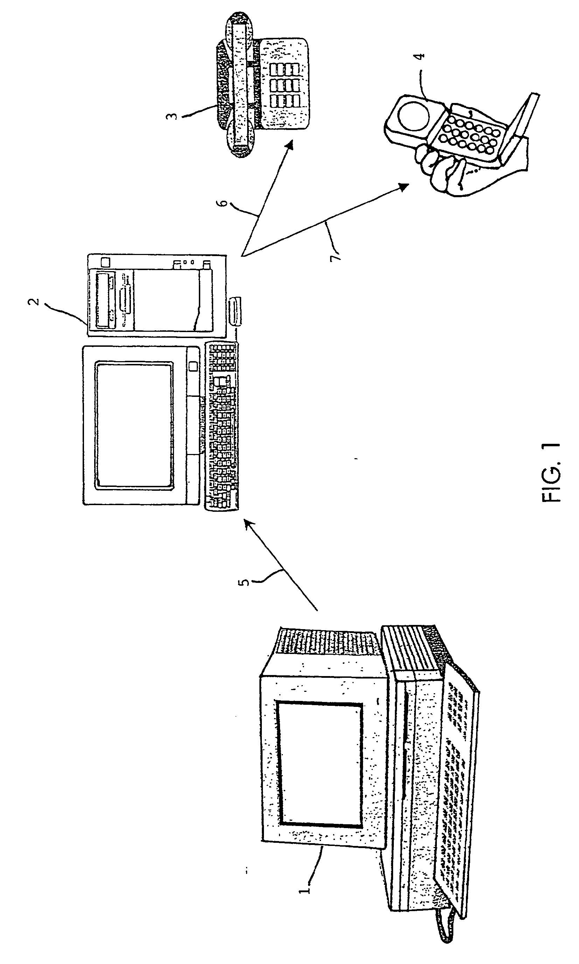

Das erfindungsgemäße Verfahren wird nun anhand von Fig. 1 beschrieben, das insbesondere die Erfassung der zuzustellenden Nachricht über einen Online-Dienst darstellt. Der Absender gibt über ein entsprechendes Online-Dienst-Eingabemenü bzw. über eingerichtete Eingabemasken die Textbotschaft bzw. Nachricht als Text ein und dazu eine oder mehrere Rufnummern eines Fest- oder Mobilnetzes. Nach vollständiger Eingabe wird die Nachricht über ein Netz 5 an den jeweiligen Netzbetreiber über entsprechende Modems, ISDN, Mietleitungen, drahtlos oder ähnliches übertragen. Die übertragene Textbotschaft bzw. Nachricht wird in eine entsprechend gesprochene Nachricht in einem Netzrechner 2 des Netzbetreibers umgewandelt und gespeichert. Danach wird automatisch vom Netzrechner 2 gesteuert die entsprechende Empfängerrufnummer unmittelbar angewählt. Bei zustandegekommener Verbindung wird die gesprochene Nachricht automatisch an den Empfänger in gesprochener Form ausgegeben. Dies kann über einen beliebigen Festnetz- oder Mobilfunkanschluß 3 bzw. 4 erfolgen. Es ist außerdem gewährleistet, daß gesteuert durch den Netzrechner 2 die Nachrichten nach Anwählen auch an mehrere Endgeräte 3 oder 4 übertragen werden.

Gleichzeitig wird bei diesem Verfahren sichergestellt, daß durch Abruf gebührenpflichtiger Seiten bei zum Beispiel T-Online die Berechnung und/oder Abbuchung automatisch erfolgt. Die Bezahlung der Leistung kann jedoch auch durch Abbuchung von der Kreditkarte oder im Lastschrifteinzug, durch Abbuchung und Einzug mittels Telefonrechnung oder durch Gebührenbelastung des Angerufenen, sofern der Empfänger gebührenpflichtige Sprachnachrichten nach entsprechender Aufforderung entgegennimmt, erfolgen. Wenn die Gebührenbelastung an den Angerufenen erfolgt, wird dies durch folgenden Verfahrensablauf implementiert: Der Telekombetreiber baut die Telefonverbindung zum Angerufenen auf, das heißt zum Empfänger der konvertierten Textnachrichten, und erzeugt zum Beispiel folgenden Ansagetext: "Sie haben eine Textnachricht von Hans Huber erhalten. Zum Abhören dieser Nachricht für X Pfennige pro Minute drücken Sie bitte die Raute-Taste an Ihrem Telefon. Zum Löschen der Nachricht drücken Sie die Stern-Taste ...".

Außerdem sollen bei diesem Verfahren folgende Leistungsmerkmale realisiert werden:
- Rundsenden, das heißt Versand der Sprachnachricht an mehrere Empfänger gleichzeitig, die zum Beispiel anhand von Verteilerlisten vorab definiert sind, zum Beispiel Benachrichtigung über wichtigen Termin an alle Mitarbeiter eines Betriebes
- zeitversetztes Senden, das heißt der Absender gibt über seine Eingabemaske den Zeitpunkt an, wann diese Nachricht als gesprochene Nachricht übermittelt werden soll
- Wahlwiederholung, das heißt das System versucht bis zu x-mal den Empfänger zu erreichen, wenn der Anschluß besetzt ist bzw. der Anruf nicht entgegengenommen wird. Gegebenenfalls erfolgt eine Mittelung an den Absender über erfolglose Zustellungsversuche
- Paralleles Senden, das heißt die eingegebene Nachricht wird als textliche e-mail an den Empfänger übermittelt und parallel dazu als konvertierte Sprachnachricht an ein Mobil- oder Festnetztelefon 4 oder 3. Der Absender gibt beide "Empfängeradressen", das heißt die entsprechende e-mail-Adresse sowie die Telefonnummern des Empfängers, ein
- Erkennungsverfahren, die es ermöglichen, maschinell zu erkennen, ob empfängerseitig Anrufbeantworter oder Voice-Box-Systeme antworten und nicht der Empfänger selbst. Das heißt, daß automatisch vermieden wird, daß zu übertragende Sprachnachricht aufgesprochen wird, obwohl empfängerseitig noch Ansagetexte laufen und die Sprachbotschaft somit verloren gehen würde. Die zu übertragende Sprachnachricht wird also erst dann gestartet bzw. erneut gestartet, wenn eine Sprechpause bestimmter Länge seitens des Empfängers eingetreten ist.

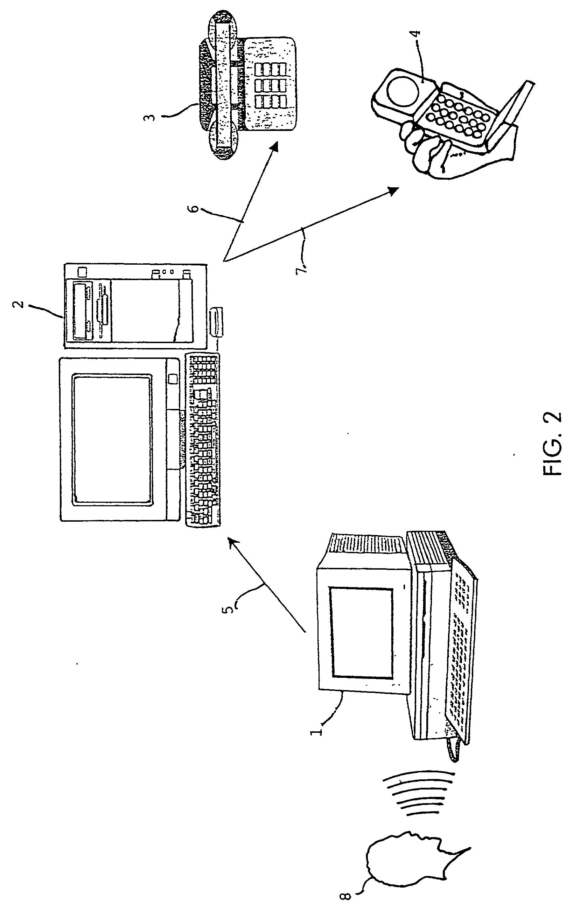

Im nachfolgenden wird eine Variante des Verfahrens anhand von Fig. 2 beschrieben, wobei die zu übermittelnde Nachricht nicht als Text eingegeben wird, sondern in gesprochener Form 8 über ein Mikrofon. Voraussetzung dabei ist, daß das Gerät 1 des Absenders über eine entsprechende Einrichtung verfügt, wie zum Beispiel ein Multimedia-Personalcomputer. Das gespeicherte Programm im Rechner 2 des Online-Dienstes wandelt dabei die Sprachsignale in maschinell verarbeitbare Formate (zum Beispiel *.wav-Datei) um. Die anderen bzw. weiteren Verfahrensschritte entsprechen denen, die im Zusammenhang mit der Fig. 1 beschrieben worden sind, wie zum Beispiel das Übertragen der Sprachsignale über das Netz 5, das Anwählen des Empfängers über Fest- oder Mobilfunknetze 6 bzw. 7, auf ein Festnetz- oder Mobilfunktelefon 3 oder 4 und letztendlich die Übertragung der Nachricht in der maschinell verarbeitbaren Form.

Anhand Fig. 1 wird eine weitere Variante des Verfahrens erklärt, nämlich die Erfassung der zu übertragenden Nachricht über ein spezielles Softwareprogramm. Die Nutzung eines Online-Dienstes ist hier nicht zwingend erforderlich. Die Anwendung kann hier mit Hilfe spezieller DV-Programme durchgeführt werden, die auf den jeweiligen Personalcomputern installiert werden. Diese sind ähnlich der Programme zur Erfassung und zum Versand von alphanumerischen Mitteilungen an Pager bzw. "SMS"-fähige Mobilfunktelefone. Die Textnachricht wird mittels geeigneter Datenübertragungsverfahren, zum Beispiel Modem, ISDN-Verbindung, Festverbindung, GSM-Verbindungen u.s.w., vom Datenendgerät des Absenders zum jeweiligen Telekom-Betreiber übertragen.

Die Abgeltung dieses Dienstes kann wie folgt implementiert werden:
a) vereinbarte Abbuchung von der Kreditkarte des Absenders bzw. durch Lastschrifteinzug
b) durch Einzug der anfallenden Gebühren über die Telefonrechung des Absenders
c) durch Anwahl einer "Premium"-Rufnummer (0190-Rufnummer im Bereich der Deutschen Telekom AG) während der Datenübertragung vom Absender zur Telekom Gesellschaft und damit Abgeltung der Leistung
d) durch Gebührenbelastung an den Angerufenen, wobei der Telekom-Betreiber die Telefonverbindung zum Angerufenen aufbaut und zum Beispiel folgenden Ansagetext erzeugt: "Sie haben eine Textnachricht von Hans Huber erhalten. Zum Abhören dieser Nachricht für X Pfennige pro Minute drücken Sie jetzt bitte die Raute-Taste an Ihrem Telefon. Zum Löschen der Nachricht die Stern-Taste". Das heißt der Angerufene kann jetzt entscheiden, ob er die Nachricht gebührenpflichtig abhören möchte oder nicht.
e) gegebenenfalls keine besondere Bezahlung für die Terminierung der Sprachnachricht beim Angerufenen, da diese Leistung bereits in der monatlichen Grundgebühr mit enthalten ist; dies ist abhängig von der Preis/Gebührenpolitik des jeweiligen Telekom-Betreibers.

In diesem Verfahren können auch wieder die Leistungsmerkmale implementiert werden, die bereits in Verbindung mit Fig. 1 beschrieben worden sind.

Im nachfolgenden wird noch eine Umwandlung von Textnachrichten in Sprache und Übertragung an Telefonendeinrichtungen beschrieben, wobei die Erfassung der zuzustellenden Nachricht über die Internet Webseite des Telekom- oder des Diensteanbieteroperators erfolgt. Grundsätzlich sind die Verfahrensschritte wie bereits vorher in Zusammenhang mit der Fig. 1 beschrieben. Die Webseite muß analog entsprechende Benutzerführung sowie Menüsteuerung für den Benutzer vorsehen. Ein Inkasso direkt über das Internet (also im Gegensatz zum Beispiel zum Online-Dienst "T-Online") ist derzeit nicht möglich. Die Bezahlung erfolgt gegebenenfalls über kombinierte T-Online und Internetanwendungen.

Im nachfolgenden werden die einzelnen Verfahrensschritte detailliert beschrieben. Zunächst editiert der Absender innerhalb der Webseite des jeweiligen Netzbetreibers bzw. des Diensteanbieters die zu übertragende Textnachricht. Er gibt ein:
- Textbotschaft
- eine/mehrere Zielrufnummer(n) (bzw. spricht bei Multimediaendgerät die Textnachricht bzw. Voice Mail auf). Die Daten werden vom Absender zum Netzrechner 2 des Netzbetreibers zum Beispiel über Modem, ISDN, Mietleitung oder drahtlos übertragen. Danach wird die Textnachricht in Sprachformat konvertiert und die Empfängernummer bzw. -nummern wird bzw. werden angewählt. Danach wird die Sprachnachricht an den jeweiligen Empfänger übertragen. Der Empfänger kann sowohl ein Festnetzanschluß 3 als auch ein Mobilfunkanschluß 4 sein, die über entsprechende Festnetze 6 bzw. Mobilfunknetze 7 mit dem Netzrechner 2 verbunden sind. Die Bezahlung der Leistung erfolgt automatisch und zwar je nach Erfordernis wie bereits bei den vorherigen Ausführungsbeispielen beschrieben. Außerdem können prinzipiell die gleichen Leistungsmerkmale, wie Rundsenden, zeitversetztes Senden, Wahlwiederholung u.s.w. implementiert werden, wie es bereits in Verbindung mit Fig. 1 beschrieben wurde.

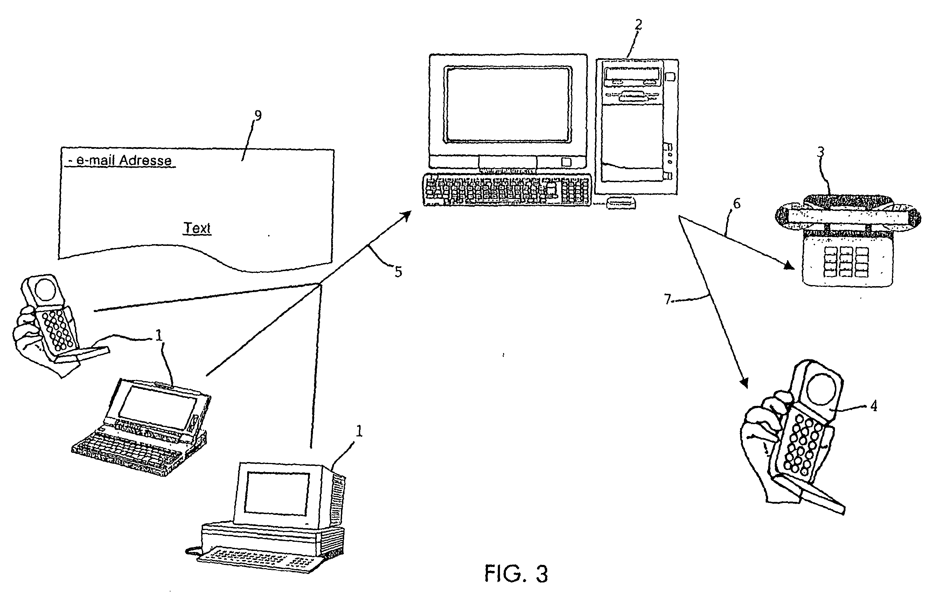

Eine andere Variante der Umwandlung von Textnachrichten in Sprache und Übertragung an Telefonendeinrichtungen wird anhand von Fig. 3 nachfolgend erklärt. Die Erfassung der zu übertragenden Textnachricht erfolgt über ein beliebiges e-mail-Programm sowie Endgeräte, die zum Versand von e-mail gemäß SMTP-Protokoll bzw. sonstigen, im Internet eingesetzten Protokollen, geeignet sind, wie zum Beispiel PC's, NC's, sogenannte Kommunikatoren und andere bekannnte Hardwareeinrichtungen.

Die Adressierung an einen beliebigen Festnetzanschluß 3 erfolgt dabei in folgender Weise:
Es wird angenommen, daß die Rufnummer des Empfängers (Endgerät 3 oder 4) wie folgt lautet: 0228/845734; diese wird umgewandelt in folgende e-mail Adresse:
   0228845734, wobei der Domain-Name sich aus dem Namen des Netzbetreibers, der diesen Dienst anbietet, ableitet. Die vollständige e-mail Adresse für die Rufnummer würde somit lauten:
      0228845734@dtag.de
         oder
      0228845734@telekom.de
         oder
      0228845734@t-voicemail.de
         oder ähnlich.

Daraus ergibt sich, daß jede existierende Festnetz- oder Mobilfunkrufnummer sich in eine eindeutige e-mail Adresse umformatieren läßt. Für e-mails, die von einem Land zu einem anderen Land versandt werden, ist gegebenenfalls die Länderkennziffer voranzustellen. Damit können von jedem beliebigen Ort weltweit per e-mail Sprachnachrichten an beliebige Rufnummern in ein Land bzw. mehrere Länder versandt werden. Wie bereits erwähnt, muß der Empfänger der Textbotschaft keine Abfragerufnummer oder ähnliches anwählen, sondern er wird nach Absenden der Nachricht vom jeweiligen Netzbetreiber oder Diensteanbieter sofort automatisch angewählt. Die Abrechnung für diesen Dienst auf Basis "e-mail" wird durch Belastung der entsprechenden Gebühren an den Nachrichtenempfänger abgegolten. Vom Gerät 1 des Absenders werden die e-mail Nachrichten über ein Netz 5 an den Netzrechner des Netzbetreibers bzw. Diensteanbieters gesendet. Vorher wurde wie bereits erwähnt die editierte e-mail 9 eingegeben. Vom Netzrechner 2 wird die Textnachricht in ein Sprachformat konvertiert, dann wird die Empfängerrufnummer angewählt und die Sprachnachricht über das jeweilige Netz 6 und/oder 7 an den Festnetzanschluß 3 und/oder den Mobilfunkanschluß 4 übertragen. Der jeweilige Empfänger erhält wie bei den vorhergegangenen Ausführungsbeispielen wiederum eine Nachricht, daß für ihn eine Textnachricht von einem bestimmten Absender vorliegt. Außerdem wird angegeben, daß diese Nachricht für X Pfennige pro Minute abgehört werden kann, wenn eine bestimmte Taste am Telefon gedrückt wird oder daß diese Nachricht sofort durch Drücken einer anderen Taste gelöscht wird, weil dieser Empfänger diese Nachricht nicht hören will. Auch sind hier wieder die bereits angegebenen Leistungsmerkmale implementierbar, wobei noch folgende Möglichkeiten hinzukommen:
- Möglichkeit der vollständigen Sperre durch den potentiellen Empfänger, das heißt der Festnetz- bzw. Mobilfunkteilnehmer wünscht keine Zustellung dieser Art von Sprachnachrichten, um zum Beispiel nicht durch Werbesendungen belästigt zu werden
- Möglichkeit der selektiven Sperre. Wie oben, jedoch nur Sperre für Mitteilungen aus bestimmten Ländern des Auslandes bzw. Filterung nach sonstigen, festzulegenden Kriterien
- Möglichkeit der Spracherkennung insbesondere bei e-mails aus dem Ausland.
   Das Umwandlungsprogramm des Netzbetreibers erkennt anhand von editierten Texten, um welche Sprache es sich handelt und damit ermöglicht es ein verständliches Einlesen in verschiedenen Sprachen, wie zum Beispiel Englisch, Französisch, Spanisch u.s.w.. Dadurch wird vermieden, daß zum Beispiel eine englische Textnachricht von der entsprechenden Software als deutscher Text gelesen und in eine gesprochene Nachricht umgewandelt wird, die weitgehend unverständlich bleibt.

Für den potentiellen Nutzer ergeben sich erhebliche Rationalisierungseffekte bei Sprachnachrichten, die keinen Dialog erfordern, zum Beispiel bei Benachrichtigungen, Meldungen oder Mitteilungen. Diese Benachrichtigungstexte lassen sich rasch mit Hilfe von Textbausteinen und entsprechenden Programmen editieren. Durch die Möglichkeit des Rundsendens, des zeitversetzten Sendens, der Möglichkeit der multiplen Auswahlversuche und ähnliches entfällt für den Versender aufwendige manuelle Tätigkeit, die jetzt praktisch durch die Hard- und Software des Netzbetreibers bzw. Diensteanbieters vollautomatisch übernommen wird. Dazu soll noch ein Beispiel aus der Praxis kurz beschrieben werden. Ein Vereinsmanager will zum Beispiel kurzfristig mehrere hundert Vereinsmitglieder über ein aktuelles Ereignis oder Ergebnis, wie zum Beispiel eine Veranstaltung, informieren. Für eine schriftliche Benachrichtigung wäre die Zeit zu kurz, Faxgeräte sind nur teilweise bei den Vereinsmitgliedern vorhanden. Die manuelle, telefonische Benachrichtigung würde für diesen Vereinsmanager extrem aufwendig verlaufen. Durch die oben beschriebene Anwendung und das implementierte Verfahren könnte eine einmalige verfasste Nachricht anhand der Adreßliste sofort an die Telefonanschlüsse im Fest- und im Mobilnetz der jeweiligen Mitglieder übertragen werden. Nutzt der Verein die Option "Übernahme der Gesprächsgebühr durch den Angerufenen bei Abhören der Sprachbotschaft", so fallen noch nicht einmal Kosten für das Rundsenden der Sprachnachrichten an. Auch das Benachrichtigen, zum Beispiel aller Mitarbeiter einer Abteilung oder eines Betriebes über ein bestimmtes Ereignis zeitgleich und kurzfristig, kann durch das Rundsenden einer entsprechenden e-mail Nachricht erfolgen, die dann an den Telefonen als gesprochener Text empfangen werden kann.

### Liste der Bezugszeichen

- 1: Gerät des Absenders (Texteingabe)
- 2: Netzrechner des Netzbetreibers
- 3: Festnetzanschluß bzw. Telefon des Empfängers
- 4: Mobilfunkanschluß bzw. Mobiltelefon des Empfängers
- 5: Übertragungsnetz
- 6: Festnetz
- 7: Mobilfunknetz
- 8: Spracheingabe
- 9: editierte e-mail

## Patentansprüche

1. Verfahren zur automatischen Umwandlung einer Textnachricht in eine Sprachnachricht sowie Weiterleitung und Ausgabe der Sprachnachricht an mindestens einen, eine Rufnummer aufweisenden Telefonanschluss in einem Fest- und/oder Mobilfunknetz eines Empfängers, wobei die zu übertragende Textnachricht über ein beliebiges Email-Programm und Endgerät (1), welches zum Versand von Emails gemäß SMTP-Protokoll oder sonstigen im Internet geeigneten Protokollen geeignet sind, eingegeben wird, und die zu übertragende Textnachricht über ein Übertragungsnetz (5) zu einem Netzrechner (2) übertragen und von dem Netzrechner (2) in ein Sprachformat konvertiert wird, **dadurch gekennzeichnet, dass** die Rufnummer des Empfängers zusammen mit der zu übertragenden Textnachricht eingegeben wird, und die Rufnummer des Empfängers in Form einer Email Adresse eingegeben wird, wobei sich der Domainname aus dem Namen des diesen Dienst anbietenden Netzbetreibers oder Diensteanbieters ableitet, und der Empfänger nach Absenden der Textnachricht vom jeweiligen Netzbetreiber/Diensteanbieter automatisch angewählt und verständigt wird, wobei der Empfänger die Nachricht durch Drücken einer Taste an seinem Endgerät verweigern oder kostenlos bzw. kostenbelastend als gesprochene Nachricht empfangen kann.

2. Verfahren nach Anspruch 1, **dadurch gekennzeichnet, dass** die Abgeltung des Dienstes nach Vereinbarung automatisch durch Abbuchung von der Kreditkarte des Absenders oder durch Lastschrifteneinzug oder durch Einzug der anfallenden Gebühren über die Telefonrechnung des Absenders erfolgt.

3. Verfahren nach Anspruch 1, **dadurch gekennzeichnet, dass** die Abgeltung dieses Dienstes durch Gebührenbelastung des Angerufenen automatisch erfolgt, und dass der Netzbetreiber bzw. Diensteanbieter nach dem Aufbau der Telefonverbindung zum Angerufenen automatisch einen Ansagetext absendet, der den Empfänger darüber unterrichtet, dass eine Textnachricht anliegt und gegebenenfalls für welchen Preis und dass der Empfänger durch Drücken von Tasten an seinem Endgerät entscheiden kann, ob die Nachricht gelöscht wird oder als Sprachnachricht empfangen wird.

4. Verfahren nach Anspruch 1, **dadurch gekennzeichnet, dass** die Abgeltung dieses Dienstes durch Anwahl einer Premium-Rufnummer eines Netzbetreibers während der Datenübertragung vom Absender zum Netzbetreiber erfolgt.

5. Verfahren nach einem der vorgenannten Ansprüche, **dadurch gekennzeichnet,dass** automatisch vom Netzrechner durch eine implementierte Software erkannt wird, ob empfängerseitig Anrufbeantworter oder Voice-Box-Systeme installiert sind und antworten.

6. Verfahren nach Anspruch 5, **dadurch gekennzeichnet, dass** die zu übertragende Sprachnachricht vom Netzrechner (2) über die entsprechenden Netze (6 bzw. 7) zu den Festnetz- bzw. Mobilfunkanschlüssen (3 bzw. 4) erst dann gestartet bzw. erneut gestartet wird, wenn eine Sprechpause einer bestimmten Länge seitens des Empfängers eingetreten ist.

## Claims

1. A method for the automatic conversion of a text message into a voice message and for the redirection and output of the voice message to at least one telephone subscriber having a telephone number in a fixed telephone network and/or mobile radio network of a receiver, wherein the text message to be transmitted is entered by means of any email program and terminal (1) that are adapted to send emails according to the SMTP protocol or according to other protocols adapted for the Internet, and wherein the text message to be transmitted is transmitted via a transmission network (5) to a network computer (2) and converted into a speech format by the network computer (2),
**characterised in that** the telephone number of the receiver is entered together with the text message to be transmitted, and the telephone number of the reciever is entered in the form of an email adress, wherein the domain name is derived from the name of the network provider or service provider offering this service, and wherein, after the transmission of the text message, the receiver is dialled up automatically and informed by the respective network provider/service provider, the receiver being able to reject the message or to receive the message as a voice message free of charge or on a charged basis by pressing a button on his terminal.

2. The method according to claim 1, **characterised in that** the payment for the service is effected by debiting the credit card of the sender or by direct debit or by collecting the accrued charges via the telephone bill of the sender, depending on the agreement.

3. The method according to claim 1, **characterised in that** the payment for said service is effected automatically by charging the called party with the fees, and **in that** the network provider or the service provider automatically transmits an announcement text after the connection to the called party has been set up, the announcement informing the receiver that there is a message waiting, and possibly also stating the charges for it, and **in that** the receiver can decide, by pressing buttons on his terminal, whether the message will be deleted or received as a voice message.

4. The method according to claim 1, **characterised in that** the payment for said service is effected by dialling a premium number of a network provider during the data transmission from the sender to the network provider.

5. The method according to any of the preceding claims, **characterised in that** the network computer automatically detects, by means of an implemented software, whether answering machines or voice box systems are installed on the receiver side and answer the call.

6. The method according to claim 5, **characterised in that** the voice message to be transmitted from the network computer (2) via the corresponding networks (6 or 7) to the fixed telephone or mobile radio subscribers (3 or 4) is only started or restarted after a pause in speech on the receiver side with a pre-determined length has occurred.

## Revendications

1. Procédé de conversion automatique d'un message de texte en un message vocal et de renvoi et d'émission du message vocal à au moins une ligne téléphonique dotée d'un numéro d'abonné dans un réseau de téléphonie fixe et/ou de radiocommunication mobile d'un destinataire, le message de texte à transmettre étant saisi par le biais d'un programme de messagerie et un terminal (1) quelconques aptes à envoyer des courriers électroniques selon le protocole SMTP ou d'autres protocoles adéquats de l'internet, et le message de texte à transmettre étant transmis par l'intermédiaire d'un réseau de transmission (5) vers un ordinateur de réseau (2) et converti par l'ordinateur de réseau (2) en un format vocal,
**caractérisé en ce que** le numéro d'abonné du destinataire est saisi en même temps que le message de texte à transmettre et **en ce que** le numéro d'abonné du destinataire est saisi sous la forme d'une adresse de courrier électronique, le nom de domaine étant déterminé à partir du nom de l'opérateur réseau ou du fournisseur de services proposant ce service, et **en ce que** le destinataire est appelé automatiquement et informé par l'opérateur réseau / fournisseur de services respectif après l'envoi du message de texte, le destinataire du message pouvant refuser le message ou recevoir le message comme message vocal gratuitement ou de manière payante en appuyant sur une touche de son terminal.

2. Procédé selon la revendication 1, **caractérisé en ce que** le paiement du service est effectué suivant accord par débit de la carte de crédit de l'expéditeur ou par autorisation de débit en compte ou par recouvrement des taxes dues par le biais de la facture de téléphone de l'expéditeur.

3. Procédé selon la revendication 1, **caractérisé en ce que** le paiement dudit service est effectué automatiquement par taxation de l'abonné B, et **en ce que** l'opérateur réseau ou le fournisseur de services envoie un texte d'annonce à l'abonné B après établissement de la connexion téléphonique informant le destinataire qu'un message est disponible et en spécifiant son coût, le cas échéant, et **en ce que** le destinataire peut décider en appuyant sur des touches de son terminal si le message doit être supprimé ou reçu comme message vocal.

4. Procédé selon la revendication 1, **caractérisé en ce que** le paiement dudit service est effectué en sélectionnant un numéro d'abonné Premium d'un opérateur réseau pendant la transmission des données de l'expéditeur à l'opérateur réseau.

5. Procédé selon l'une des revendications précédentes, **caractérisé en ce que** l'ordinateur de réseau reconnait automatiquement moyennant un logiciel mis en oeuvre si des répondeurs ou des systèmes de boîtes vocales sont installés et répondent côté destinataire.

6. Procédé selon la revendication 5, **caractérisé en ce que** le message vocal à transmettre par l'ordinateur de réseau (2) aux lignes fixes ou mobiles (3 ou 4) par l'intermédiaire des réseaux (6 ou 7) correspondants n'est lancé ou relancé que si une pause vocale d'une durée déterminée a été marquée côté destinataire.
